# EUROPEAN PATENT APPLICATION

(11) **EP 0 576 098 A2**
(43) Date of publication of application: **29.12.1993**
(21) Application number: 93201826.0
(22) Date of filing: 24.06.1993
(51) Int. Cl.: H02J 13/00, H05B 37/03

(54) **System of transmission of information about the state of loads connected to an electric line**

(30) Priority: 26.06.1992 ES 9201347; 15.06.1993 ES 9301325; 21.06.1993 ES 9301387
(71) Applicant: INGENIERIA DE SISTEMAS DE CONTROL S.A., E-03800 Alcoy, (Alicante) (ES)
(72) Inventor: Esparza Olcina, Rafael, Alcoy (Alicante) (ES)
(74) Representative: Ungria Lopez, Javier

(57) **Abstract**

It has a central control unit that is connected to a plurality of sector control units which in turn, each one of them is connected, by means of the electric feed line (1) of the load (12), to a plurality of load control units, each one of which is connected to a sole lamp (12); detecting and storing the possible load operation failures; failures that are transmitted through the electric feed line itself (1), to the corresponding sector control unit.

It has phaseout detection means of the voltage applied to the load (12), with regard to the intensity consumed, effecting a correct detection of the state of said lamp (12.)

The load control unit has insulations means through which the connection to the electric feed line (1) is made in the base of the stand.

The load control unit is capable of having detection means of the temperature of the lamp or of the luminous radiation thereof, determining the correct operation of the lamp in terms of the value of said parameters.

The load control unit is capable of being comprised of detecting means of the operation of each one of the elements that comprise the luminaire (capacitor, reactor, lamp or starter); determining which of the elements has a failure.

## Description

The invention in question is applicable to the control of the state of lamps of street as well as industrial lighting, for which purpose in a specific area, each one of the lamps is connected to a load control unit, which in turn, are connected to a sector control unit.

There may be a plurality of sector control units, in terms of the geographic area to be controlled.

The sector control units are capable of being connected to a central control area, so that in the latter the state of each and every one of the lamps that are connected to the different sector control units is known.

Now then, an object of the present invention, consists of permitting the connection of the load control units to each one of the lamps in the base of the stand, only being inserted in the two feed wires of the light spot, which tremendously facilitates the installation thereof.

Besides, another object of the invention is to detect the capacitance currents that would flow through the capacitor associated to each one of the lamps, when they are burnt out, and upon effecting the interrogation by means of pulse trains on the part of the sector control unit, situation in which it would be detected that the lamp is operating correctly, when the lamp, is really out of service; so that erroneous interpretations are avoided.

It should also be indicated that another purpose of the invention consists of eliminating resistive type drains in the lines, upon carrying out the interrogation by the above indicated pulses, so that upon said pulses being produced the flow of current through the lamps which would be detected by the sector control unit is avoided, this being interpreted as a response from the load control units, thus avoiding, incorrect detections also.

Another purpose of the invention consists of determining the correct operation of the lamp, by means of measuring the temperature or luminous radiation at a point close to the lamp, so that when said point exceeds a certain temperature or luminous radiation value, it can be assured that the lamp has turned on correctly.

The final object of the invention consists, once a failure has been detected, of specifying which is the element of the light spot that has a failure (capacitor, reactor, lamp or starter.)

### BACKGROUND OF THE INVENTION

The closest prior art to the invention is Spanish patent of invention no. 9002043, which consists of an information transmission system to supervise and show the state of a plurality of loads connected to an electric line; such as for example the loads of street or industrial lighting lines, machines, sensors, etc.

Now then, in the cited patent some load control units are described, each one of which is connected to a lamp detecting the state of the lamp.

On the other hand, a plurality of load control units is connected to a sector control unit through the electric network, so that this latter unit centralizes the information coming from the previous ones.

Now then in the cited patent of invention, the transmission of information is done through the following mechanism:
The load control units detect the state of the same and store it in a memorization cell.

The sector control unit emits a series of pulses and watches the intensity response of the line. When an over-intensity is detected, it is understood that the load control unit corresponding to the number of pulses generated up to then, has responded that the state of its assigned load or lamp is correct.

For this purpose the load control units have pulses present in the line, and when the pulse corresponding to the inside coding thereof they generate or do not generate an overintensity according to the state of the load watched in terms of the state being correct or not, respectively.

This entire operating diagram presupposes that when interrogations are made, there is no resistive type drain in the lines, since this would give rise to erroneous interpretations on the part of the sector control unit, therefore the interrogations are done when there is no feed in the electric line.

The above cited situation, though there is no feed in the electric line, is produced, for example, in the street lighting networks, when there are incandescent lamps connected, since upon interrogation pulses being produced, a flow of current through the lamps which is detected by the sector control unit is generated and is interpreted as a response of the load control units, which represents an erroneous detection.

Besides, the load control unit of the indicated patent of invention has, among others, a voltage control circuit and another intensity control circuit, so that a logical circuit determines, that there being voltage, there is also intensity, thus it is understood that the state of the load is correct. The voltage and intensity detection variables are therefore discrete; in other words, they only adopt one of the values depending on whether the supervised.

This method is perfectly valid for certain loads, and, in particular, for discharge lamps of the type used for street lighting.

However, this method is not valid when there is no physical space inside the luminaire to install the detection unit.

Neither is it valid in old installations in which including a detection unit implies a great deal of installation work.

On the other hand, the cited patent solely provides a correct or incorrect operation signal of the light spot, but it does not provide information at all about which of the constructive elements of the light spot is the one that has the failure.

### DESCRIPTION OF THE INVENTION

In order to solve each and every one of the above cited inconveniences, the invention has developed a new load control unit that has different embodiments in terms of the different objectives that were commented on above.

As the first objective, the fact of making it possible to connect the load control unit to the base of the stand was indicated, and the possibility of detecting capacitance currents that flow through the capacitor of the luminaire, when the lamp is burned out and the interrogation is done by means of pulses from the sector control unit.

In the first instance, to achieve these objectives, the load control unit is connected to the electric feed line by means of a shunt through which all the current of the light spot flows.

The feed line is connected through the sunt to two galvanic insulation circuits, each one of which is connected, in turn, to a pulse generating circuit.

The pulse generating circuits are connected to a phase comparator, such that, from the feed and current voltage, the shaping circuits generate two square pulse trains in phase with the voltage and with the intensity.

The phase comparator circuit determines if the pulse train is advanced or delayed with regard to the voltage pulse train. In this way, if it is advanced the current is capacitance and, therefore, the lamp is burned out. If it is in phase or delayed, the current is resistive or inductive respectively, and the lamp is in a perfect condition. The phase comparator circuit generates a logical signal as a result of this comparison that is stored in a memorization cell of the failure condition.

The rest of the elements that make up the load control unit correspond with those described in patent 9002043, referred to in the section on the background of the invention, and whose description to provide a better understanding of the present invention, is made hereinafter.

The failure condition memorization cell is connected to a logical control circuit which in turn is connected to a descending counter.

The descending counter is connected to some microswitches and to a pulse detector circuit that in turn is connected to the electric feed line, in such a way that by means of the pulse detector circuit, comprised of several filters, certain pulses of the network are allowed to pass through which means that it is interrrogating the network and transmitting information. These pulses pass to the descending counter which controls the number of pulses sent by the sector control unit so that if these coincide with the number of the unit itself included in the microswitches, it causes a response generating circuit that is sent to a surge generating circuit by which the response of the state of the corresponding lamp is generated, which is connected to the load control unit.

Besides, communication between the sector control unit and the load control unit is carried out when the street lighting has been disconnected, in other words, when there is no feed in the network, instant as of which codified pulses are sent to identify each load control unit, there being the inconvenience that upon sending said codified pulses, in the event that they are incandescent lamps, a current flow is generated by the same which is detected by the sector control unit and interpreted as a response from the load control units.

In order to solve this inconvenience, in the electric conduction line and after the load control unit, a switching circuit in inserted. This switching circuit is connected to a detection circuit of alternating current higher than the threshold, which in turn is connected to a feed circuit that is connected to the electric conduction network in order to make it possible to feed the above cited elements.

The switching circuit consists of a relay that is connected to the input and the output of the device when an alternating feed voltage higher than the threshold is detected, and it disconnects when the latter disappears; besides, it does not connect it when interrogation pulses appear.

In this way, the above cited problem is avoided, upon the lamp disconnecting when the interrogation on the part of the sector control unit is carried out, so that the response sent by each load control unit is correct.

Besides, the circuit complies with the condition that when the voltage is lower than the specific threshold (interrogation pulses), its current drain is non-existent, whereby no erroneous indications are produced in the sector control unit.

The improvements described and obtained by means of the present invention are perfectly valid, although they make the sector control unit a bit complicated, thus, according to the present invention, such unit is simplified by using another detection criterion such as will be described hereinafter.

In order to achieve said simplification the temperature or luminous radiation in a point close to the lamp is measured, so that when said point exceeds a certain temperature of luminous radiation value, one can be sure that the lamp has correctly turned on.

This objective is materialized by means of the use of a temperature or light sensor, which is placed in a place close to the lamp, such as for example, in the reflectors of the luminaires; point from which the sector control unit is connected.

The load control unit has a comparator in which a specific temperature or luminous radiation value is set, so that when the temperature or luminous radiation of the lamp exceeds the reference value, the comparator generates a signal indicating that the lamp has turned on correctly.

The comparator circuit is connected to the memorization unit of the operating condition already described.

Likewise, the rest of the sector control unit corresponds to that which has been described above.

Keeping in mind the description made up until now, it is obvious that, in the case of a failure of the luminaire, there is no detection of which of the elements is that which has failed, which would simplify and reduce obviously the repair times.

In order to achieve these objectives, the load control unit is comprised of a microprocessor with an internal EEPROM memory in which the number of the load control unit is codified, which constitutes the identification number with regard to the sector control system to which it is connected.

The state of the luminaire throughout its lighting period is stored in the EEPROM memory, and specially at the moment of its disconnection, which makes it possible to determine subsequently, if said point has suffered subsequent disconnections and connections, while there was voltage in the electric feed network.

In order to determine the correct operation of each one of the elements that comprise the luminaire, such as the capacitor, reactor, lamp, or in some cases the starter, the microprocessor is connected, to the luminaire by means of a series of interfaces to determine the measurement of the different parameters from which the correct operation or failure of each one of said components is established.

Thus, in order to verify the state of the compacitor, the microprocessor is connected to a voltage interface and to a current interface, through which it is connected to the luminaire.

In this way, it becomes possible to analyze the wave-form determining whether the parameters of the capacitor are within the normal limit of improvement of the cosine φ of an installation.

By means of measuring the general voltage of arrival to the light spot, by measuring the voltage in the terminals of the lamp and by measuring the current absorbed by the lamp, the state of the reactor is obtained.

On its part, measuring the voltage in the terminals of the lamp, as well as the current absorbed by the same, and the phase thereof, constitute the parameters necessary to check the state of the lamp.

In the event that the lamp requires the use of a starter, the microprocessor is connected to a starter interface whose output is connected to said starter, in such a way that it is possible to measure the pulses provided by the same, after filtering thereof.

Besides, it should be indicated that the microprocessor is capable of being connected to a group relay, through which the connection of the light spot to the electric network is made, permitting the connection and disconnection of the lamp at the user's convenience, and permitting in the case of an incandescent type luminaire, the insulating of the latter when the interrogation is made to determine the different parameters.

Besides, the microprocessor can be connected to a photocell to independently control the connection and disconnection of the luminaire, in which case use of the group relay is necessary.

Besides, the microprocessor can be connected to a luxometer placed in a spot close to and outside the lampshade of the luminaire, for the purpose of determining when the same has to be cleaned.

Another of the inputs of the microprocessor has the function of detecting an auxiliary voltage to check any additional parameter, such as feedback to the connection relay of the lamp by means of a light intensity measuring cell, detecting the opening of the stand, etc.

The microprocessor may have an auxiliary output whose use permits the user to govern a second luminaire of which it is not desired to obtain its state and to which it is only going to be connected on rare occasions.

Likewise, the microprocessor is connected to a communication interface to allow communication with the sector control unit.

In this way, by means of the invention a total control of a street or industrial lighting network is obtained.

Hereinafter to provide a better understanding of this specification and forming an integral part of the same, a series of figures in which the object of the invention has been represented in an illustrative and non-restrictive manner is attached hereto.

### BRIEF DESCRIPTION OF THE FIGURES

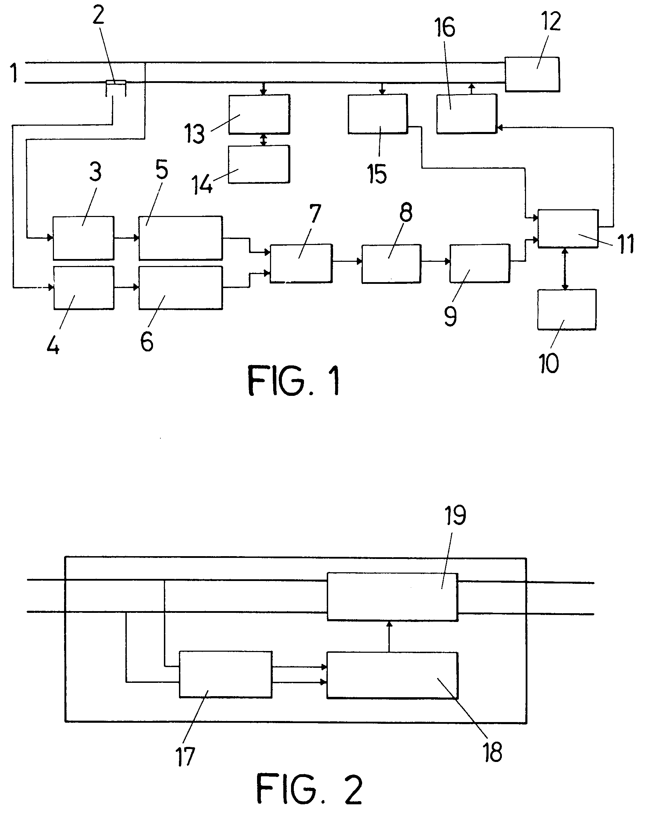

Figure 1.- It is a functional block diagram of an embodiment of the load control unit from which it is possible to make the connection of the load control units, to each one of the lamps, all at the base of the stand; and by means of which capacitance currents that flow through the lamps are detected, when the lamps are burnt out, avoiding incorrect detections.

Figure 2.- It is a functional block diagram of a device that is inserted in the feed line after the load control unit, in order to prevent current from flowing through the incandescent lamps upon checking pulses being produced from the sector control unit, situation in which this current would be detected by the sector control unit, which would erroneously interpret the response from the load control units.

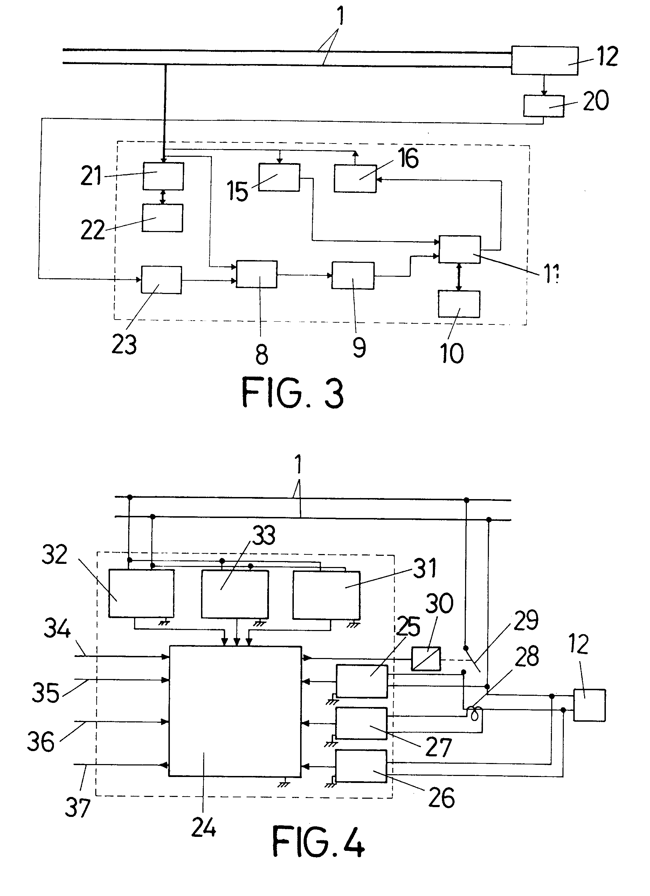

Figure 3.- It is a block diagram of another embodiment of the simplified load control unit, which is connected to a sensor, to detect the correct lighting of the lamp, by measuring the temperature or luminous radiation provided by it.

Figure 4.- It is a functional block diagram of another embodiment of the load control unit, by means of which it is possible to detect, in the case of failure, which of the elements that comprise the luminaire (capacitor, reactor, etc.) is the one that has a failure.

### DESCRIPTION OF ONE OR SEVERAL EMBODIMENTS

Hereinafter a description is made of the invention based on the above cited figures.

In the first place, the different units that were revealed in patent of invention no. 9002043 commented on in the section of the background of the invention are described, to provide a better understanding of the present invention.

In said patent a central control unit (not represented in the figures) controlling the operation of the system was included, that is connected to a plurality of sector control units, which in turn, each one of which is connected, through the electric feed line (1) to the load or lamp (12), to a plurality of load control units (figures 1), each one of which is connected to one of the loads (12) to be supervised.

The central control unit can be used optionally in an information system of the state of loads. Inclusion thereof corresponds to the specific need of the use and the degree of control that is to be obtained.

The central control unit communicates with the different sector control units, in which the state of each and every one of the lamps connected to them is gathered.

The central control unit as well as the sector control unit are not the object of the present invention, thus they are not described in further detail.

The technical advance of the invention are centered on the load control unit, whose structure and operation are described hereinafter. The electric feed line (1) is connected through a shunt (2) to the corresponding load control unit; for this purpose said load control unit has two galvanic insulation circuits (3) and (4) that are connected, respectively, to pulse generators (5) and (6), which in turn, are connected to a phase comparator (7.)

In this way, all the current of the light spot flows through the shunt (2) whereby from the feed voltage and from the cited current, the pulse generating circuits (5) and (6) generate two square pulse trains in phase, with the voltage and with the intensity.

The pulse trains are delivered to the phase comparator circuiut (7) that determines whether the current pulse train is advanced or delayed with regard to the voltage pulse train. If the pulse train is advanced, the current is capacitive and, therefore, the lamp (12) is burnt out; on the contrary if it is in phase or delayed, the current is resistive or inductive, respectively and the lamp (12) is in a perfect operating condition.

Therefore, the phase comparator circuit (7) generates a logical signal as a result of the above indicated comparison, which is stored in a memorization cell of the failure condition (8) or memorization cell of the operating condition (8), depending on the required needs, such that if there is a failure in the lamp a disconnected load order is emitted, at the adequate moment.

The memorization cell of the failure condition (8) is connected to a logical control circuit (9), which in turn is connected to a descending counter circuit (11) to make the control of the same in terms of the signal obtained.

The rest of the description that is made hereinafter, corresponds with the one of the indicated patent. This description is considered necessary to provide a better understanding of the present invention, thus it is included hereinafter.

The descending counter (11) is connected to some microswitches (10) and to a pulse detector circuit (15) that is turn is connected to the electric feed line (1), in such a way that by means of the pulse detector circuit (15), consisting of several filters, certain pulses are allowed to pass through the network which mean that the network is being interrogated and information is being transmitted, pulses that pass to the descending counter (11), which controls the number of pulses sent by the sector control unit, such that if these coincide with the number of the unit itself included in the microswitches (10), it causes a response pulse generating order that is sent to a surge generating circuit (16) by means of which the response of the state of the lamp (12) is generated.

The communication between the sector control unit and the load control unit is carried out when the street lighting has been disconnected, in other words, when there is no feed in the network, instant as of which the above cited codified pulses are sent, knowing the load control unit, from the galvanic insulation circuits (3) and (4), when the electric lighting has gone out, and therefore the lamp (12) assigned to it.

The sector control unit emits a series of pulses to interrogate the different control units and to watch the intensity response of the line (1.) When an overintensity is detected, the load control unit and corresponding number of pulses generated up until then, has responded that the state of the load thereof is correct.

For this purpose the load control units count the pulses present in the line by means of the line pulse detector (15) and the descending counter (11) and when the corresponding pulse reaches its inside coding, the descending counter, from the state of the microswitches (10), generates a signal for the surge generator (16), which emits or does not emit an overintensity depending on whether the state of the controlled load is correct or not respectively, all of this governed by the logical control circuit (9).

This entire operating diagram presupposes that when the interrogations are made there are no resistive type drains in the lines (1), since this would give rise to erroneous interpretations on the part of the sector control unit.

This situation is produced, for example, in street lighting networks when there are incandescent lamps connected. Upon pulses being produced a flow of current through the lamps is generated which is detected by the control unit and interpreted as responses to the load control units.

In order to prevent that this misinterpretation from taking place, the invention has a device (figure 2) that includes a switching circuit (19) that is inserted in the electric conduction network (1), between the lamp (12) and the load control module.

The switching circuit (19) is connected to a detection circuit of alternating current higher than the threshold (18), which in turn is connected to a feed circuit (17) that is connected to the electric feed network.

In this way, the feed circuit (17) provides the energy necessary so that the other elements operate, and it provides the network voltage to the detection circuit of alternating current higher than the threshold (18), that detects the presence of an alternating feed voltage higher than a specific threshold; and besides it is not activated with the voltage pulses coming from the sector control unit during the interrogation periods.

The switching circuit (19) consists of a relay that connects the input and output of the feed network (1) when an alternating feed voltage higher than the threshold is detected, and disconnects it when the latter disappears. It does not connect it when interrogation pulses appear; all this governed and guided by the detection circuit of alternating current higher than a threshold (18.)

Besides, when the voltage is lower than a specific threshold, produced by interrogation impulses, its current drain is non-existent, thus erroneous indications are not produced in the sector control unit.

In this way, the connection of any type of lamp (12) to the load control unit is permitted.

According to another embodiment, the load control unit is simplified by using another system for detecting the correct operation of the lamp.

The new load control unit has been enclosed by a dash line (figure 3) and it is connected to a temperature or luminous radiation sensor element (1) outside the unit itself and connected to it by means of two flexible and temperature resistant electric wires.

The temperature or luminous radiation sensor (1) is fixed to a point close to the lamp (12), such as for example on the reflectors of the luminaires, where in the event that the sensor is a temperature one, a significant rise of temperature above room temperature takes place when the lamp (12) has been lighted for some time, for example 70º C.

In the event that a light sensor (1) is used, it will similarly be placed in a position on which the luminous radiation generated by the lamp fall.

The temperature sensor (1) consists of a resistance variable with the temperature, with a negative variation coefficient, in other words, a rise in temperature implies a reduction of the resistance of the sensor, and vice versa, a drop in temperature implies an increase of resistance.

The light sensor operates exactly in the same way, but with the particularity that it is sensitive to luminous radiation instead of to temperature.

The load control unit has a detection circuit (23) by means of which connection to the sensor (1) is carried out.

The detection circuit (23) consists of a comparator that determines at all times the difference between the standard fixed internal resistance and the external resistance of the sensor (1.) When this difference is higher that a certain value, indicating that the temperature or light has reached a preset value and that, therefore, the lamp (12) has lighted up correctly, the comparator produces an output signal that is stored in the memorization cell of the operating condition (8.)

The standard fixed internal resistance is gaged in such a way, that it makes it possible to determine when the lamp has reached the preset temperature or light intensity value, such as for example the above cited 70º C; situation in which it is obvious that the lamp has lighted up correctly.

The rest of the elements that form the load control unit have already been described, in the example of the above embodiment; with the exception of numerical references (21) and (22.)

Reference number (21) refers to the feed source that is connected to a energy reserve circuit (22), in order to provide the voltages necessary for the correct operating of the load control unit. Likewise, these two units can be included in the above embodiment.

In the two embodiments described above, in the case of a failure, the element that has produced the same is not detected.

In order to carry out this function, a new load control unit has been developed, which is basically comprised of a microprocessor (24) furnished with an internal EEPROM memory in which the identification number of the load control unit is codified, for identification thereof with regard to the sector control unit to which it is connected.

Likewise, in the EEPROM memory, the state of the luminaire throughout its lighting period is stored and especially when it is disconnected, which permits one to know later on if said point has endured disconnections and connections later on, while there was voltage in the electric feed network.

Besides, said memory stores the operating conditions of the load control unit in terms of the different possibilities of operation of the invention, just as is described hereinafter.

The elements that make up a luminaire are a compacator, reactor or starter, and the lamp itself.

Now then, the main object of the load control unit consists of detecting which of said elements is the one with a failure, in the event that there is such a failure.

In order to achieve these objectives, the microprocessor (24) is connected to a voltage interface (25) and a current interface (27), through which the connection to the load (12) takes place; which in turn is connected to the electric network (1.)

In this way, analysis of the waveform is permitted, whereby it is possible to determine whether the operating parameters of the capacitor are within the normal parameters of improvement of the cosine φ of an installation.

Besides, by means of said interfaces (25) and (27) it is possible to make the measurement of the general voltage of arrival to the light spot, of the voltage in the terminals of the lamp and of the current absorbed by the lamp, obtaining by means of these measurements the parameters necessary to obtain the state of operation of the reactor.

Likewise, with the measurement of the voltage of the terminals of the lamp and of the current absorbed by the same, as well as its phase, the parameters needed to detect the state of the lamp are obtained.

In the event that the luminaire is an incandescent type one, the luminaire is connected to the electric network (1) through the group relay (30), which is governed by the microprocessor (24), for the purpose of producing the insulation thereof when the interrogation is made in order to check the state thereof.

In the event that the lamp is a high pressure sodium type one, it will be necessary to make the connection of the lamp to the microprocessor through a starter interface (26), by means of which the pulses generated by the starter are detected, in order to verify the correct operation thereof.

The microprocessor (24) is capable of being connected to a photocell, outside the load control unit, through its input (34), for the purpose of independently controlling the connection of the luminaire in terms of the photocell; therefore in this case the activation and deactivation is produced through the group relay (30), in terms of the signal obtained by said photocell.

Besides, the microprocessor is capable of being connected through its input (36), whose function consists of detecting the need to clean the light spot, for which reason said luxometer is placed outside the lampshade, situation in which upon not receiving enough light, it indicates that the lampshade is dirty and has to be cleaned. Obviously the measurement of this signal is made a prudent amount of time after the connection of the luminaire has taken place, in order to guarantee that there is no supply of daylight affecting the measurement.

Besides, the microprocessor (24) has an auxiliary input (34) through which it is possible to verify any additional parameter, such as feedback to the connection relay of the lamp by means of a light intensity measuring cell, a detector of the opening of the door of the stand, etc.

The microprocessor (24) is capable of having an auxiliary output (37) by means of which, after receiving the message that in the presence of the network this output is to be activated, the same will be activated giving voltage to the system of 220 volts.

A use of this application consists of governing a second luminaire of which it is not desired to obtain its state and to which connection is going to be made on cetain occasions.

This same circumstance takes place with the group relay (30), which upon the microprocessor circuit (24) detecting network presence, it proceeds to close this relay so that the user, can make the individual connection of each light point according to the needs of use of the installation.

The communication of the microprocessor (24) is carried out by means of a communication interface (32) which is conencted to the electric network (1), by means of which the communication protocols needed to communicate with the secot control unit.

The basic form of communication is that of the use of pulses of a defined duration and that codify in decimals some states or actions to be carried out.

So that the time reference is defined by the sector control unit and so that the number of equipment, as well as the room temperature are independent, each communication process will start with the sending on the part of the sector control unit, of a standard reference pulse, so that it be measured by each load control sector and subsequently used as the time base to understand the sector control unit, and at the right moment to generate the adequate responses on the part of the lamp control unit and the latter are understood by the sector control unit.

The communication protocol is thus a pulse sequence with a multiple duration of the arrival standard, such sequence forming present as well as future action messages. A response on the part of the load control unit may follow a response.

The message that is generated is formed from the data that are stored in the EEPROM memory, thus it is no longer necessary to carry out the interrogation process immediately after disconnecting the lighting, since the information, is no longer lost.

The different operation modes, described of the microprocessor (24), in terms of the inputs and outputs used, have to be formed in the microprocessor (24), indicating to it the inputs and outputs that must be dealt with, and how it is to act upon the same.

Besides, the microprocessor (24) is connected to the communication interface (32) through a feed interface and a detection circuit of more than 48 volts, all in order to provide the feed necessary for the correct operation of the load control unit.

## Claims

1. System of transmission of information about the state of loads connected to an electric line, that has a central control unit that is connected to a plurality of sector control units that in turn, each one of them is connected, through the electric feed line (1) of the load (12), to a plurality of load control units that have a memorization circuit of the failure condition (8), with a logical control circuit (9), with a microswitch (10), a descending counter (11), a line pulse detector (15) and a surge generating circuit (16), each load control unit being connected to a single lamp (12); detecting and storing the possible load operating failures; failures that are transmitted through the electric feed line itself (1) to the corresponding sector control unit, when there is no feed, and from the latter to the control unit; essentially charactereized in that it has means of detection of the advance or delay of the phase of the voltage applied to the load (12), with regard to the phase of the consumed intensity, establishing whether the current is capacitance, resistive or inductive so that it detects the capacitance current that would flow through the capacitor associated to the lamp (12), when the latter is burnt out, effecting a correct detection of the state of said lamp (12); and with the particularity that the load control unit has insulation means through which the connection to the electric feed line (1) is carried out, making it possible to effect said connection in the base of the stand, solely being inserted in the two feed wires of the light spot without the need of haveing access to the space in which the luminaire is located; and it being provided for that the load control is capable of having means for detecting the temperature of the lamp, or its luminous radiation, determining the correct operation of the lamp in terms of the value of said parameters.

2. System of transmission of information about the state of loads connected to an electric line, according to claim one, characterized in that the insulation means that permit connection to the base of the stand are comprised of two galvanic insulation circuits (3) and (4) that are connected to the electric feed line (1), through a shunt (2), through which all the current of the lamp flows; and with the particularity that the means of detecting the advance or delay of the phase of the voltage applied to the load, with regard to the intensity consumed by said charge (12); are comprised of two pulse generators (5) and (6) that are connected, respectively, to the galvanic insulation circuits (3) and (4), so that the former generate two square pulse trains in phase with the voltage and with the intensity; it being provided for that the pulse generators (5) and (6) are connected to a phase comparator circuit (7) that determines whether the current pulse train is advanced or delayed with regard to the voltage pulse train; establishing whether the current is capacitance, resistive or inductive, in such a way that the capacitance current that would flow through the capacitor associated to the lamp (12) is detected, when the lamp burns out, effecting a correct detection; and with the particularity that the phase comnparator circuit (7) is connected to the memorization circuit of the failure condition (8) in which the state of the lamp (12) is stored.

3. System of transmission of information about the state of loads connection to an electric line, according to claims 1 and 2, characterized in that in the electric feed line (1) and between the lamp (12) and the load control unit, a switching circuit (19) that is connected to a detection circuit of alternating current higher than a threshold (18) is inserted, which in turn is connected to a feed circuit (17), that is connected to the electric feed line; all in order that when interrogation pulse train is emitted, these pulses are detected by the detection circuit of the alternating current higher than a threshold (18), activating the switching circuit (19) that cuts the electric feed line (1) and prevents current from flowing through incandescent type lamps, preventing the sector control unit from interpreting this current as responses from the load control units.

4. System of transmission of information about the state of loads connected to an electric line, according to claim 1, characterized in that the means for detecting the temperature of light intensity, that can be included in the load control unit; are comprised of a detection circuit (23), which basically consists of a comparator, and that is connected to a temperature or luminous radiation sensor (1), placed near the lamp (12); this all in order to establish a reference quantity in the comparator which upon being reached by the sensor (1), it can be assured that the lamp has lighted up correctly; generating an output signal that is stored in the memorization cell of the operating condition (8), the operating state of the lamp remaining memorized which is sent to the corresponding sector control unit, when the latter interrogates the load control unit.

5. System of transmission of information about the state of loads connected to an electric line, which has a central control unit that is connected to a plurality of sector control units which in turn, each one of which, is connected, through the electric feed line (1) of the load (12), to a plurality of load control units; each load control unit being connected to a sinegle lamp (12) detecting and storing the possible load operating failures; failures which are transmitted through the electric feed line itself (1) to the corresponding sector control unit; when there is no feed and from the latter to the control unit; essentially characterized in that the load control unit is capable of being comprised of means of detecting the operation of each one of the elements that form the luminaire (capacitor, reactor, lamp or starter); for the purpose of detecting, in the event of a failure, which of the elements has caused the same.

6. System of transmission of information about the state of loads connected to an electric line, according to claim 5, characterized in that the means of detecting the operation of each one of the elements that form the luminaire, are comprised of a microprocessor (24) provided with an internal EEPROM memory in which the state of the luminaire throughout its lighting period is stored, and especially when it is disconnected; making it possible to detect the subsequent disconnections and connections that the light spot has suffered; the microprocessor (24) being connected to the load (12), throug a voltage interface (25) and a current interface (27), all in order to obtain the waveform applied to the luminaire establishing whether the operating parameters of the capacitor are within the normal parameters of improvement of the cosine φ of an installation; and for the purpose of determining the measurement of voltage in the terminals of the lamp as well as the current absorbed by the same, and the phase thereof; determining the state of the reactor and of the lamp or charge (12.)

7. System of transmission of information about the state of loads connected to an electric line, according to claim 5, characterized in that the microprocessor (24) is capable of being connected to a starter interface (26) which is connected to a starter, of the ones used in certain types of luminaires, for the purpose of detecting the pulse train generated by the same determing the correct operation thereof.

8. System of ttransmission of information about the state of loads connected to an electric line, according to claims 5 and 7, characterized in that in the event the luminaire is of an incandescent type, the luminaire is connected to the electric network (1), through a group relay (30), that is governed by a microprocessor (24); in order to produce the insulation of the luminaire upon being interrogated by its operating state.

9. System of transmission of information about the state of loads connected to an electric line, according to claims 8 and 5, characterized in that the microprocessor (24) is capable of being provided with an input (34) for the connection of a photocell in order to independently control the connection of the luminaire in terms of the user's needs; and it being provided that the microprocessor (24), also has an input (36) for the connection of a luxometer placed outside the lampshade of the luminaire; in order to detect dirt on said lampshade, indicating that the lampshade has to be cleaned; and it being provided that the microprocessor (24) has an auxiliary input (35) of voltage detection in order to check any additional parameters such as detecting the opening of the door of the stand or other parameters.

10. System of transmission of information about the state of loads connected to an electric line, according to claims 8 and 5, chacterized in that the microprocessor (24) is capable of havning an auxiliary voltage output (37) at 220 volts, in order to activate different mechanisms such as for example a second luminaire of which it is not desired to obtain its state and which connection thereto is only done on rare occasions.

11. System of transmission of information about the state of laods connected to an electric line, according to claim 5, characterized in that the microprocessor (24) is connected to the electric line (1) through a communication interface (32) through which it communicates with the sector control unit; it being provided for that said communication interface (32) is connected to a feed interface and to a detection circuit of more than 48 volts; both connected to the microprocessor; in order to permit the feed of the load control unit.
